# EUROPEAN PATENT SPECIFICATION

(11) **EP 1 357 626 B1**
(45) Date of publication and mention of the grant of the patent: **03.10.2007**
(21) Application number: 02008530.4
(22) Date of filing: 15.04.2002
(51) Int. Cl.: H01M 8/10, H01M 8/02, C25D 11/04, B01D 71/02

(54) **Process for manufacturing a proton conducting membrane having an alumina matrix**
Herstellungsprozess für eine protonenleitende Membran mit Aluminiumoxidmatrix
Procédé de fabrication d'une membrane conductrice de protons ayant une matrice en oxyde d'aluminium

(43) Date of publication of application: 29.10.2003
(73) Proprietor: Becromal S.p.A., I-20089 Quinto de' Stampi Rozzano (MI) (IT)
(72) Inventor: Chiavarotti, Giovanni Pietro, 20152 Milano (IT); Sunseri, Carmelo, 90129 Palermo (IT); Gullo, Umberto, 90129 Palermo (IT); Di Quarto, Francesco, 90011 Bagheria (IT); Bocchetta, Patrizia, 91026 Mazara del Vallo (IT)
(74) Representative: KEIL & SCHAAFHAUSEN Patentanwälte

(56) References cited:
- WO-A-96/01684
- DE-A- 2 444 541
- DE-A- 3 210 096
- US-A- 4 687 551
- US-A- 4 859 288

## Description

The invention relates to a process for manufacturing a proton conducting body starting with a porous body, in particular suitable as a membrane, e.g. for use in a fuel cell, according to the preamble of claim 1.

Chemical processes that use permeable membranes have become more and more important at industrial level during operations concerning the separation and purification of chemical mixtures. These processes, which are more and more widespread operations in various industrial processes, are dialysis, reverse osmosis, electro dialysis, gas separation, for example. The choice of the material forming the membrane is of particular importance in these sectors because it must provide suitable requirements as for porosity, number of holes, diameters, etc. but also be inert chemically, and in certain cases it must be able to operate in a wide range of temperature and pH. Most of the membranes use mainly synthetic material formed by polysulphonates and polyamide. However, these membranes are not inert enough for many applications.

Also methods for manufacturing porous alumina films by anodising an aluminium substrate in an electrolyte are already known. WO 96/01684 A1 discloses e.g. a method for manufacturing porous alimunia films by anodising an aluminium substrate in phosphoric acid electrolyte at a voltage between 10 and 200 V and a temperature of 10° to 12°C. The remaining aluminium substrate is electrochemically dissolved. Prior to the above process, the aluminium substrate is being degreased in boiling octane.

A similar process is disclosed in US 4,687,551 showing a method for manufacturing porous alumina films by anodising an aluminium substrate in 0,4 molar phosphoric acid at potentials between 70 and 670 V and a temperature of 25°C. The aluminium substrate is submitted to caustic etching. Similar processes for manufacturing a porous alumina film are described in US 4,859,288 and DE 24 44 541 A1.

Accordingly, it is the object of the present invention to provide membranes with high inertia and usable in a wide range of temperature for use in fuel cells.

This object is solved by a process according to the features of claim 1 performing mainly the following steps:
a) providing a thin substrate having the geometrical base of the body which is to be produced.
b) providing an alumina film by an electrochemical process on the substrate,
c) separation of the substrate from the alumina film, and
d) drying and chemical etching of the alumina film.

Further, the pores of the alumina film are filled with a material having high proton conductivity. This process offers the possibility of producing an alumina membrane in an electrochemical way. Alumina is a ceramic oxide with excellent inert properties which is also resistant to high temperatures. It is formed by a regularity of hexagonal cells with a cylindrical hole in the middle. The uniform distribution of pore diameters and their periodicity give an excellent membrane model. Their manufacture does not imply the use of dangerous expensive substances and the production technique is an electrochemical process of anodic oxidation on specific operation conditions. Especially for the use of these membranes in fuel cells, the proton conductivity is of particular importance for a good functioning of the fuel cell.

As to polymeric membranes, alumina presents many technical and commercial advantages, such as:
- resistance to high temperature and electronic radiation
- supply of rigid surfaces usable as an initial support in order to attain template nanostructures
- attaining porosity by change of the conditions of the electrochemical rise
- possible thickness of 200 µm, so that particles are shifted and not trapped inside the holes.

According to an advantageous embodiment of the process of the present invention, the substrate too is made of aluminum. The use of aluminum plates, for example with a thickness of 100 micron, gives a better scale up behaviour of the process with respect to aluminum cylinders. Further, the membrane can be separated in a chemical way instead of an electrochemical process. The use of chemical separation leads to symmetrical membranes and the use of thin metal plates having bigger surfaces allows an continuous production process with respect to cylindrical electrodes. In order to stop the breakdown when metal, solution and the border of the cell come into contact with each other, parts of the cell surfaces are covered with inert plastic materials (as e.g. neoprene, teflon, silicone) or with an isolating varnish to limit the anodic surface, and the surface is treated with electro-polishing.

Further, for the electrochemical deposition of aluminum on the substrate, a galvanic bath is used. The bath temperature should be within a range of about 0°C to about 20°C. The preferred temperature is about 5°C.

A clear morphological structure will be obtained when the bath temperature is held constant during the aluminum deposition on the substrate.

According to the present invention, the bath should include an approximately 0,4-molar phosphoric acid.

It has been found, that the anodizing voltage applied can go up to 160 V in order to obtain a clear porous structure.

Advantageously, the substrate is submitted to a cleaning process before anodizing. The cleaning process might be provided by an alkaline bath process or an electro-polishing process.

Further, the invention is directed to the use of an alumina membrane manufactured in the before-mentioned process for fuel cells.
- Fig. 1: shows the anodizing current during the tensiodynamic stage of the anodizing process
- Fig. 2: shows the anodizing current during the tensiostatic stage of the anodizing process
- Fig. 3: shows a table with the number N, the dimension D of the pores and the porosity P of membranes obtained in a 0,4M H₃PO₄ at 160V and different bath temperatures
- Fig. 4: shows a table with the number N, the dimension D of the pores and the porosity P of membranes obtained in a 0,4M H₃PO₄ at 160V at different bath temperatures
- Fig. 5: shows the correlation of the open circuit potential and the current density of a membrane prepared for fuel cells for precipitation at a temperature of 170 °C

In the following, a process for manufacturing an alumina membrane is explained in detail.

Initially, the surface of the aluminum substrate is treated with a chemical polish process in 5M KOH for about 15 seconds. Alternatively, the surface can be cleaned by electro-polishing in an EtOH-HClO₄-mixture.

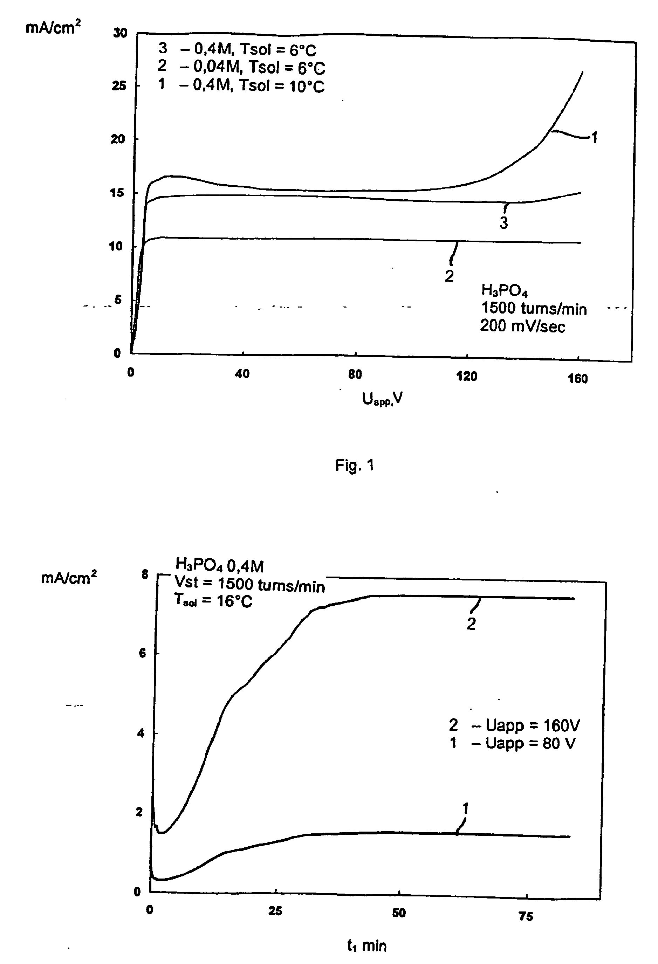

Then, the aluminum sheets of about one or several hundred micron used as substrates are anodized. The counter electrode is an Pt-wire. As electrolyte, a vigorously stirred 0,4M H₃PO₄ solution is used. Preferably, in the beginning of the anodizing process the applied voltage is augmented continuously with a growth rate of about 200 mV/sec until the final potential is reached. During this tensiodynamic stage of the process the anodizing current rises strongly when starting and remains almost constant until the breakdown voltage is reached, as is shown for different electrolyte concentration and temperature in Fig. 1. Because of the slow growing of the tension applied, various geometrical substrate forms can be used without voltage breakdown in the cell. The optimum potential is about 160V. However, a voltage less than 160 V can be applied. This voltage is held constant during anodizing.

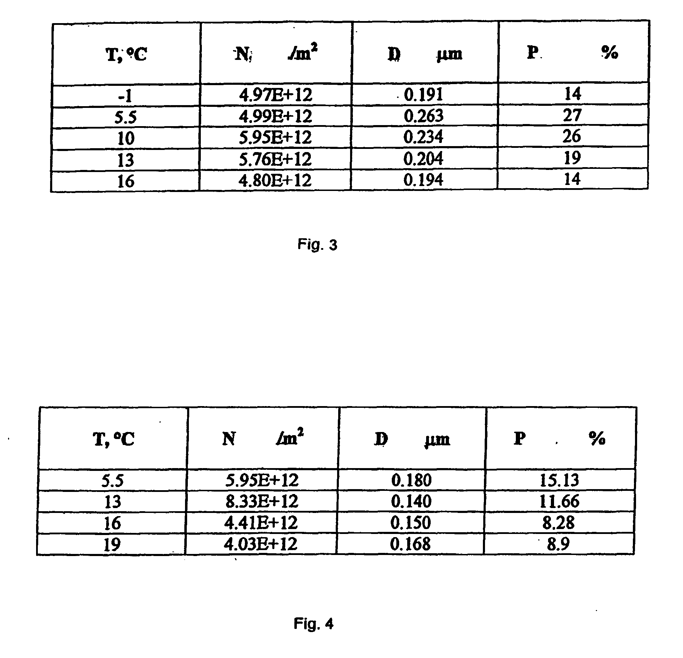

In Fig. 3, the typical course of the anodizing current in the tensiostatic stage at the final voltage is shown. The two plots represent different final potentials. The plot's minimum represents the beginning of the formation of the porous structure. During this tensiostatic stage of the anodizing process, the porous structure is growing almost linearly with the charge flown. The thickness also strongly depends on the electrolyte concentration and temperature.

Best results have been reached with a constant electrolyte temperature of about 5°C with 0,4M H₃PO₄. Fig. 3 and 4 show tables with experimental results as a function of the bath temperature in different electrolyte concentrations giving number of pores, their average dimension and the porosity.

After the anodizing, the porous layer is detached. This can be performed by a step-by-step reduction of the potential or a selective chemical dissolution of aluminum.

Finally, the obtained alumina samples are dried at about 40°C. Thereafter, a chemical etching process is performed in 0,4M H₃PO₄.

The efficiency in the production of membranes of a thickness between 20 and 50 micron and the morphological structure depend on the concentration of the solution and the temperature of the bath.

With the above procedure, alumina membranes can be manufactured that are highly inert and therefore usable in fuel cells, for example.

An inorganic membrane for a fuel cell has been prepared by starting with porous alumina membrane having an estimated geometrical porosity of about 20% with a thickness in the order of 60 micron and pore diameter in the range of 0.2 micron.

The pores of membranes have been filled, by using different procedures, with an inorganic proton conductor salt of formula near to CsHS₂O₄. Different filling procedures were used starting with aqueous solution of CsHS₂O₄.

A membrane electrode assembly was prepared by using a composite alumina membrane, filled with proton conductor, and two electrodes made of commercial electrocatalytic carbon paste containing noble metal particles (Pt). The electrodes were prepared by depositing on commercial carbon paper carbon paste containing Pt metal powder in a concentration of about 30% giving a catalyst loading of about 1.8 mgr/cm².

After sealing the membrane electrode assembly into the cell it was heated until the assembly reached a temperature of 170°C. Once reached this temperature the gas feeding was switched on and H₂ and O₂ gases, at atmospheric pressure, were sent to the electrodes.

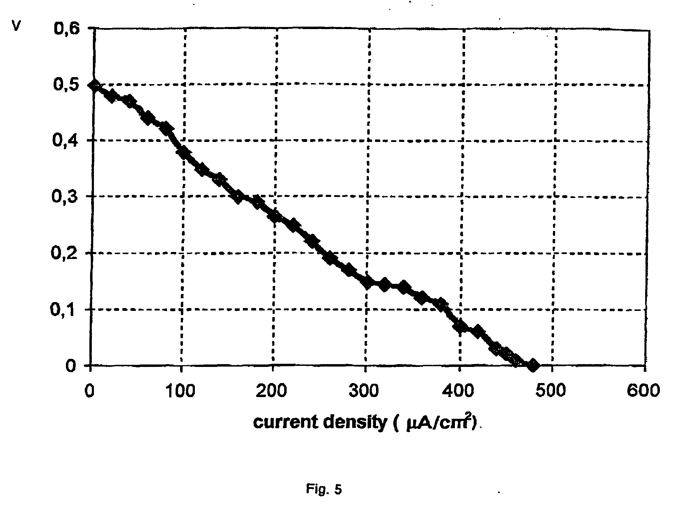

A quite stable open circuit potential, Voc, ranging between 0.35 Volt and 0.65 Volt was measured depending on the nature of membrane electrode assembly. A maximum current density, Icc, of about 450 µA/cm² with Voc of about 0.5 Volt has been measured (see Fig. 5).

Accordingly, the process according to the present invention is well suited for manufacturing alumina membranes for fuel cells.

## Claims

1. Process for manufacturing a proton conducting body starting with a porous body, in particular suitable as a membrane, e.g. for use in a fuel cell, performing the following steps:
a) providing a thin substrate having the geometrical base of the body which is to be produced,
b) providing an alumina film by an electrochemical process on the substrate,
c) separation of the substrate from the alumina film, and
d) drying and chemical etching of the alumina film,
**characterized in that** the pores of the alumina film are filled with an inorganic proton conductor salt having high proton conductivity.

2. Process according to claim 1, wherein the substrate is made of aluminum.

3. Process according to claim 1 or 2, **characterized by** a galvanic bath for electrochemical deposition of alumina on the substrate.

4. Process according to claim 3, wherein the bath temperature is within a range of about 0°C to about 20°C.

5. Process according to claim 3 or 4, wherein the bath temperature is about 5°C.

6. Process according to one or more of claims 1 to 5, **wherein** the bath temperature is hold constant during alumina deposition on the substrate.

7. Process according to one or more of claims 1 to 6, **wherein** the bath includes an approximately 0,4-molar phosphoric acid.

8. Process according to one or more of claims 1 to 7, **wherein** an anodizing voltage of up to 160 V is applied.

9. Process according to one or more of claims 1 to 8, **characterized by** a cleaning process of the substrate before anodizing.

10. Process according to claim 9, wherein the cleaning process is provided by an alkaline bath process or an electro-polishing process.

11. Use of an alumina membrane manufactured in a process according to one of the claims 1 to 10 for fuel cells.

## Patentansprüche

1. Herstellungsprozess für einen protonenleitenden Körper startend mit einem porösen Körper, insbesondere geeignet als Membran, beispielsweise zum Gebrauch in einer Brennstoffzelle, wobei folgende Schritte ausgeführt werden:
a) Vorsehen eines dünnen Trägers mit der geometrischen Basis des herzustellenden Körpers,
b) Vorsehen eines Aluminiumoxidfilms auf dem Träger mittels eines elektrochemischen Prozesses,
c) Trennen des Trägers von dem Aluminiumoxidfilm, und
d) Trocknen und chemisches Ätzen des Aluminiumoxidfilms,
**dadurch gekennzeichnet, dass** die Poren des Aluminiumoxidfilms mit einem anorganischen Protonenleiter-Salz mit hoher Protonenleitfähgikeit gefüllt werden.

2. Herstellungsprozess nach Anspruch 1, wobei der Träger aus Aluminium besteht.

3. Herstellungsprozess nach Anspruch 1 oder 2, **gekennzeichnet durch** ein galvanisches Bad zur elektrochemischen Deposition von Aluminiumoxid auf dem Träger.

4. Herstellungsprozess nach Anspruch 3, wobei die Badtemperatur innerhalb eines Bereichs von ungefähr 0°C bis ungefähr 20°C liegt.

5. Herstellungsprozess nach Anspruch 3 oder 4, wobei die Badtemperatur bei ungefähr 5°C liegt.

6. Herstellungsprozess nach einem oder mehreren der Ansprüche 1 bis 5, wobei die Badtemperatur während der Deposition von Aluminiumoxid auf dem Träger konstant gehalten wird.

7. Herstellungsprozess nach einem oder mehreren der Ansprüchen 1 bis 6, wobei das Bad eine ungefähr 0,4-molare Phosphorsäure aufweist.

8. Herstellungsprozess nach einem oder mehreren der Ansprüche 1 bis 7, wobei eine Anodosierspannung von bis zu 160 V angewendet wird.

9. Herstellungsprozess nach einem oder mehreren der Ansprüche 1 bis 8, **gekennzeichnet durch** einen Reinigungsprozess des Trägers vor der Anodisierung.

10. Herstellungsprozess nach Anspruch 9, wobei der Reinigungsprozess durch einen alkalischen Badprozess oder durch einen Elektropolierprozess vorgenommen wird.

11. Verwendung einer Aluminiumoxidmembran, welche in einem Herstellungsprozess gemäß einem der Ansprüche 1 bis 10 hergestellt ist, für Brennstoffzellen.

## Revendications

1. Procédé pour la fabrication d'un corps conduisant les protons à partir d'un corps poreux, notamment pour un usage en tant que membrane, par exemple pour l'utilisation dans une pile à combustible, comprenant les étapes suivantes :
a) utilisation d'un substrat fin ayant la forme géométrique du corps à fabriquer,
b) dépôt d'un film d'alumine sur le substrat par un procédé électrochimique,
c) séparation du substrat du film d'alumine, et
d) séchage et attaque chimique du film d'alumine,
**caractérisé en ce que** les pores du film d'alumine sont remplis avec un sel minéral conducteur de protons présentant une haute conductivité pour les protons.

2. Procédé selon la revendication 1, dans lequel le substrat est en aluminium.

3. Procédé selon la revendication 1 ou la revendication 2, **caractérisé par** un bain galvanique prévu pour le dépôt électrochimique d'alumine sur le substrat.

4. Procédé selon la revendication 3, dans lequel la température du bain se situe dans une fourchette comprise entre 0 °C et environ 20 °C.

5. Procédé selon la revendication 3 ou 4, dans lequel la température du bain est d'environ 5 °C.

6. Procédé selon l'une ou plusieurs des revendications 1 à 5, dans lequel la température du bain est maintenue constante durant le dépôt de l'alumine sur le substrat.

7. Procédé selon l'une ou plusieurs des revendications 1 à 6, dans lequel le bain comprend de l'acide phosphorique à environ 0,4 molaire.

8. Procédé selon l'une ou plusieurs des revendications 1 à 7, dans lequel est appliqué un courant anodisant allant jusqu'à 160 V.

9. Procédé selon l'une ou plusieurs des revendications 1 à 8, **caractérisé par** un procédé de nettoyage du substrat avant l'anodisation.

10. Procédé selon la revendication 9, dans lequel le procédé de nettoyage est effectué par un passage dans un bain alcalin ou par un procédé d'électropolissage.

11. Utilisation d'une membrane d'alumine fabriquée par un procédé selon l'une des revendications 1 à 10 pour des piles à combustible.
